Europäisches Patentamt

**European Patent Office**

**Office européen des brevets**

(11) Publication number: **0 158 483**
**A2**

(12) # EUROPEAN PATENT APPLICATION

(21) Application number: **85302150.9**

(22) Date of filing: **28.03.85**

(51) Int. Cl.⁴: **G 01 N 1/28**

(30) Priority: **30.03.84 DE 3411809**

(43) Date of publication of application:
**16.10.85 Bulletin 85/42**

(84) Designated Contracting States:
**FR GB SE**

(71) Applicant: **PARKE, DAVIS & COMPANY**
**201 Tabor Road**
**Morris Plains New Jersey 07950(US)**

(72) Inventor: **Weinhold, Helmut**
**Egerlandweg 13**
**D-6834 Ketsch(DE)**

(74) Representative: **Coxon, Philip et al,**
**Eric Potter & Clarkson 14 Oxford Street**
**Nottingham NG1 5BP(GB)**

(54) **Tank for use in specimen treatment apparatus.**

(57) A tank for use in specimen treatment apparatus has a treatment medium zone receiving a liquid, particularly a liquid for fixing microtomy tissue specimens. A conduit for air and a conduit for liquid pass into the tank above the zone. The conduits have outer ends lying outside the tank and are provided with endpieces which are insertable into recesses in a connector of coupling means, the recesses being in turn connected to a tube for the delivery or withdrawal of the liquid and a tube connected to an apparatus for generating a positive or negative pressure. The terminal inner ends of the air and liquid conduits are located spaced apart in the interior of the tank. The tank and conduits are adapted to permit the zone to be loaded with treatment fluid and the conduits to be subsequently coupled to the coupling means without alteration of the orientation of the tank.

EP 0 158 483 A2

TANK FOR USE IN SPECIMEN TREATMENT APPARATUS

This invention relates to a tank for use in a specimen treatment apparatus particularly for use in fixing microtomy tissue specimens.

Microtomy fixing tanks are known having one end face through which pass a pipe for air and a pipe for liquid. The outer ends of the pipes project out of the tank and are provided with endpieces which can be plugged into recesses in a connecting member, and the recesses in the connecting member are in turn connected to further pipes, of which one is provided for the delivery or withdrawal of the liquid and the other is connected to apparatus for generating a positive or a negative pressure. The inner ends of the pipes remote from the outer ends are spaced apart in the interior of the tank.

In order to fix tissue specimens it is necessary first of all to dehydrate the specimens and afterwards to fix the dehydrated specimens. The dehydration of microtomy specimens is generally effected by means of an alcohol, and alcohols of differing concentrations are used in consecutive dehydration steps. Separate tanks are required in which the alcohols at the various increasing concentrations are present.

After dehydration the microtomy specimens are fixed in, for example, a formalin solution.

Tanks for the different concentrations of alcohol are known in which an air pipe and a liquid pipe are passed through an end face of the tank. These tanks are typically filled with the appropriate liquid while in an upright position, and are then tightly connected in a horizontal position to a connector; the connector may be located in a cabinet in which the tanks are stored side by side. The horizontal position is at right angles to the upright position. However, these known tanks can only be filled up to approximately half their total height when in the upright position, in order that, when the tanks are in use in the horizontal position, the liquid cannot rise to the inner end of the air pipe located in the interior of the tank, so that no liquid can then penetrate into the apparatus for generating a positive or a negative pressure. These known tanks are accordingly utilised only up to approximately one half of their capacity, and they require refilling very frequently. Refilling can clearly also be effected when the tank is in the horizontal position, in which case a negative pressure is generated in the air pipe connected to the tank, so that liquid is sucked into the tank through the liquid pipe connected to the tank. The induction of liquid must only be effected up to a level which is below the inner end of the tank air pipe, that is to say approximately up to the horizontally oriented longitudinal median axis of the horizontal tank.

In order to withdraw the liquid from the tank, a positive pressure is generated in the apparatus connected to the air pipe, which acts upon the liquid present in the tank and causes the liquid to flow out through the liquid pipe.

The horizontal arrangement of the known tanks can give rise to sealing problems during the insertion of the endpieces, particularly the endpiece of the liquid pipe, into the horizontally disposed recesses in the connector, and as a result liquid may leak from the connector. This is detrimental to the cleanliness and especially to the functional efficiency of the tank, and particular care must be taken to ensure to the precise insertion of the endpieces of the tank pipes into the recesses in the connector.

It is an object of the present invention to provide a tank which can be handled extremely simply. It is a further object to provide a tank in which the sealing problems between the two pipes from the tank and the corresponding recesses in the connector are avoided in a simple manner.

According to the present invention there is provided a tank for use in specimen treatment apparatus having coupling means, pressure generation means, and a treatment medium reservoir, said tank comprising a treatment medium zone for receiving treatment medium, a conduit for air, and a conduit for treatment medium, said air conduit and treatment medium conduit extending through the tank above the treatment medium zone, and being adapted to be coupled to the coupling means to couple the air conduit to the pressure generation means and to couple the treatment medium conduit to the treatment medium reservoir, and said conduits being adapted to permit the treatment medium zone to be loaded with treatment medium, and the conduits to be subsequently coupled to the coupling means without alteration of the orientation of the tank.

Advantageously the coupling means includes a connector having a recess connected to the pressure generation means and a recess connected to the treatment medium reservoir, and wherein said air and liquid conduits each have an outer end each provided with an endpiece adapted to be received in the recesses.

Preferably the tank has an upper region above the treatment zone, said conduits extending through the upper region, and a base region opposite said upper region, and wherein the outer ends of each conduit extend in a direction towards the level of the base region of the tank.

Desirably the pressure generation means can selectively generate a positive or negative pressure.

The tank according to the invention is accordingly positioned upright at all times, and can not only be half filled, but advantageously can be substantially totally filled, without any danger of the liquid passing into the pressure generating means. Owing to the downwardly directed endpieces (i.e. extending towards the base region of the tank) at the outer ends of the air and treatment medium conduits, the two conduits are automatically fluid-tightly connected to the recesses in the connector when the tank is hung into the connector, and the excellent fluid-tight connection between the tank and further conduits which are connected between the connector and the pressure generation means and the treatment medium reservoir is enhanced by the deadweight of the tank.

The tank may be hung in the connector by inserting the downwardly directed endpieces of the air and treatment medium conduits extending from the upper face of the upright tank into the corresponding recesses in the connector, which are connected respectively to a first conduit to receive or dispense the treatment medium from the treatment medium reservoir, and to a second conduit connected to the pressure generation means.

The treatment medium may be a liquid such as, for example, alcohol, and the air and treatment medium conduits may be in the form of pipes.

The tank can be filled with liquid very simply and cleanly, or liquid can be withdrawn from the tank equally simply and cleanly, to dehydrate or fix a microtomy specimen. In order to fill the tank a negative pressure is generated in the apparatus to suck the liquid into the upright tank. Because the tank is positioned vertically, it can advantageously be virtually totally filled without the liquid being sucked into the pressure generating means. The tank according to the invention is utilised substantially better than a tank of the known kind, which can only be approximately half filled, so that a tank in accordance with the invention can be kept in use for twice as long as a known tank of equal capacity.

The endpieces at the outer ends of the air and liquid pipes may be disposed side by side and mutually parallel. The parallel arrangement of the two endpieces enables the pairs of recesses in the connector, which are each firmly connected to a liquid conduit and to an air conduit, to be set relatively close together. This permits the connector to be of a highly compact construction, and hence the cabinet in which the connector is located in close association with a plurality of tanks according to the invention can also be of compact construction.

Advantageously, a flange extends outwardly from one side of the upper face of the tank, and the outer ends of the air and liquid pipes pass downwardly through the flange, the endpieces being positioned on the underside of the flange. Such a flange provides excellent mechanical stability for the endpieces of the two pipes, so that the endpieces can at any time be very easily inserted into the corresponding recesses in the connector. The fluid-tight connection between the endpieces and the recesses is further enhanced by the deadweight of the tank, because the deadweight of the upright tank urges the downwardly directed endpieces into the recesses in the connector.

The endpieces may each comprise an exterior surface tapering conically downwards, and sealing means to seal the endpieces inserted into the recesses of the connector against the connector. The downwardly tapering conical exterior surfaces of the two endpieces produce a self-centering effect, whereby the tank can be accurately hung on the connector without difficulty. After the endpieces have been centered by means of the conically tapered exterior surfaces, the sealing means, which may take the form of O-rings, ensure excellent sealing of the endpieces into the corresponding recesses in the connector. In this manner, clean operation without leaks or wastage of liquid is always possible.

The upper face of the tank may include a raised portion into which the air pipe extends, the inner end of the air pipe being located in an interior space within the raised portion. This raised portion, which operates in the manner of a steam dome, known per-se, enables the tank to be virtually completely filled with liquid without the liquid being able to penetrate and damage the pressure generating means.

The liquid pipe may extend through the upper face of the tank alongside the raised portion, the inner end of the liquid pipe being located adjacent the base region of the tank. The location of the inner end of the liquid pipe adjacent the base region of the upright tank enables the liquid in the treatment medium zone to be drained, except for a negligibly small remainder, by generating a positive pressure in the air pipe, whereby the liquid is forced out of the tank through the liquid pipe. This removal of the liquid can be metered extremely accurately by controlling the air pressure.

By virtue of the this arrangement of the air pipe and of the liquid pipe, and of their inner ends in the interior space within the raised portion and adjacent the base of the tank, the full volume capacity of the tank can be utilised.

The air and liquid pipes may be disposed side by side and mutually parallel above the upper face of the tank and above the flange, and at least one of the pipes may be constructed so that it can serve as a handle. By constructing at least one of the two pipes as a handle, a separate handle need not be provided. The air pipe is preferably the handle; to this end the air pipe may be disposed so that it extends centrally over the flange and is spaced from the upper face of the tank. This provides a handle-which is mechanically very stable.

The endpieces of the air and liquid pipes may be disposed parallel to the longitudinal axis of the tank and set at different radial distances from the longitudinal axis. The endpieces of the air and liquid pipes may be of different external diameters. By so arranging the endpieces of the two tank pipes, and by a corresponding construction of the recesses in the connector into which the tank is inserted by means of its endpieces, the insertion of the endpiece of the liquid pipe into the recess for receiving the air pipe or insertion of the end pipe of the air pipe into the recess for receiving the liquid pipe, can be prevented.

A tank according to the invention can be handled extremely simply. Excellent sealing of the tank into the connector is achieved at all times, particularly as a result of the deadweight of the upright tank. A further advantage is that substantially the entire volume of the tank is available for receiving and/or for withdrawing a liquid, so that very long periods may elapse between individual refilling operations.

Further particulars, features and advantages will be apparent from the following description of an exemplary embodiment of a tank in accordance with the invention illustrated in the accompanying drawings, in which:-

Figure 1 is a longitudinal section through a tank according to the invention;

Figure 2 is a plan view of the tank shown in Figure 1; and

Figure 3 is a plan view showing an alternative embodiment of the tank according to the invention.

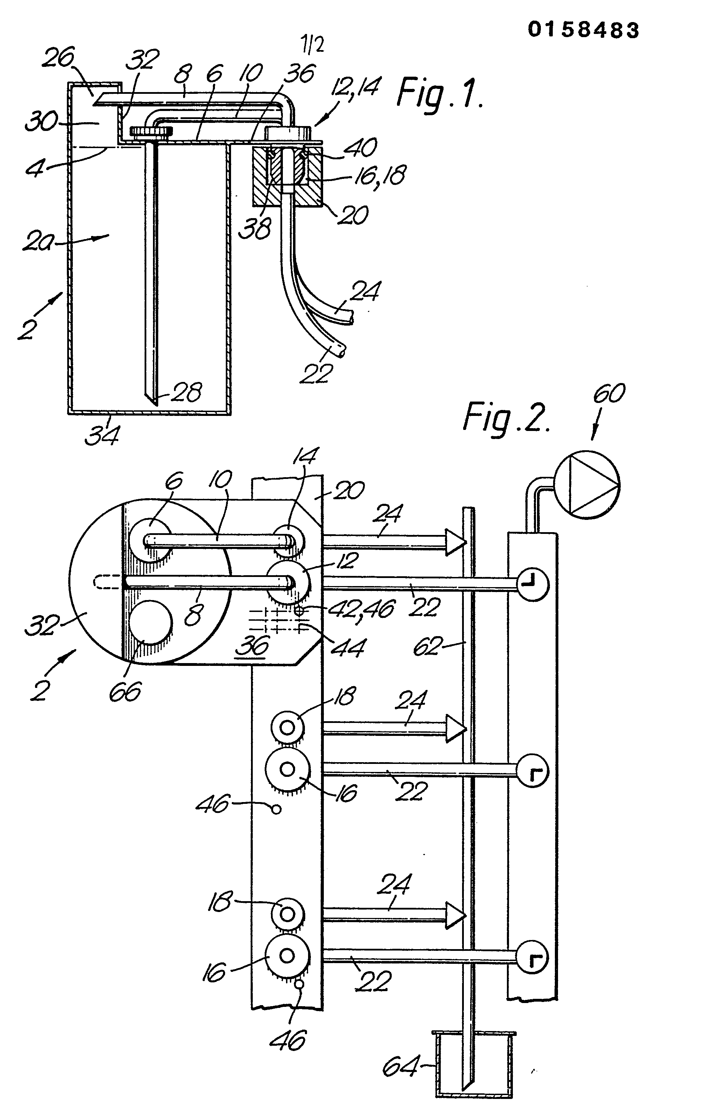

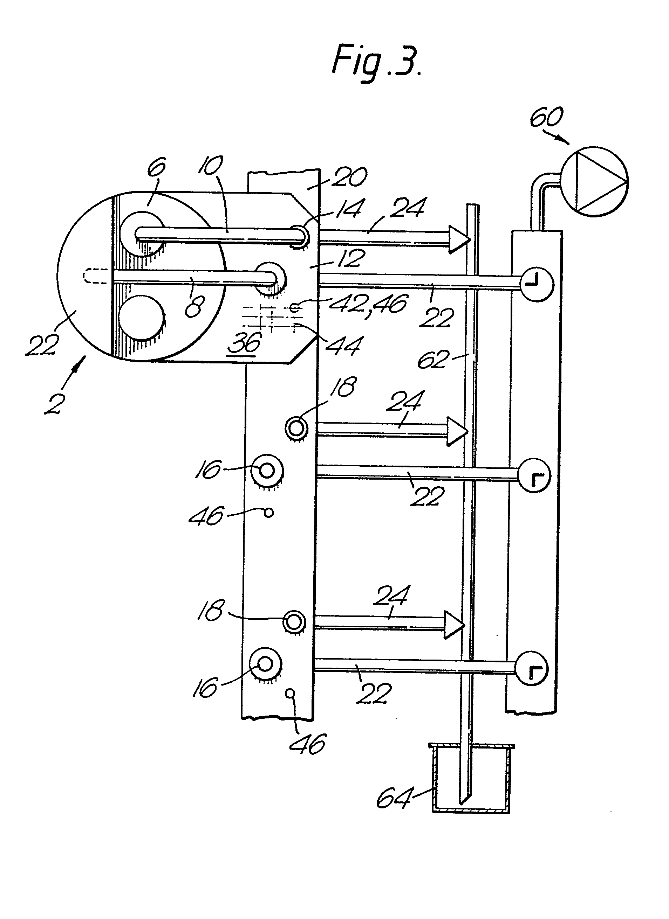

Figures 1 and 2 show a tank 2 disposed in an upright position having a treatment medium zone 2a which receives a treatment medium which may, for example, be a formalin solution in which tissue specimens are fixed for microtomy.

A conduit for air in the form of a pipe 8 and a conduit for treatment medium liquid in the form of a pipe 10 pass into the tank 2 through an upper face 6 of the upright tank 2, above the zone 2a. The terminal outer ends of the pipes 8 and 10 lying outside the tank are provided with endpieces 12 and 14 respectively. The endpieces 12 and 14 are insertable into recesses 16 and 18 respectively in a coupling means including a connector 20.

The connector 20 is provided with a plurality of pairs of recesses 16 and 18. Each pair of recesses 16 and 18 is connected to conduits 22 and 24 respectively; the conduits 22 and 24 are in the form of pipes. The conduit 24 is provided for the delivery or withdrawal of the liquid 4, and the conduit 22 is connected to an apparatus generally designated 60, for generating a positive or negative pressure. The connector 20 is located in a cabinet (not shown) and is constructed as an elongate rail, for example. The conduit 24 is connected to a conduit 62 which communicates with a treatment medium reservoir in the form of an incubation chamber 64.

The terminal inner ends of the pipes 8 and 10 which are remote from the outer ends, are designated 26 and 28 respectively. The ends 26 and 28 are disposed in the interior of the tank 2, and spaced apart such that the inner end 26 of the air pipe 8 is located in an interior space 30 within a raised portion 32 on the upper face 6 of the tank; the interior space 30 forms a so-called steam dome.

The tank 2 is provided with a cap 66 which can be removed to permit the tank to be filled with treatment medium when in the upright position.

The liquid pipe 10 extends through the upper face 6 of the tank 2 alongside the raised portion 32, while the inner end 28 of the liquid pipe 10 is located adjacent a base 34 of the tank 2 in the treatment zone 2a

The endpieces 12 and 14 provided at the outer terminal ends of the two pipes 8 and 10 are located alongside the tank 2 and are directed downwardly towards the level of the base 34. The end pieces 12 and 14, which are disposed side by side and are mutually parallel, are positioned on the underside of a flange 36, the outer ends 12 and 14 of the air and liquid pipes 8 and 10 passing downwardly through the flange 36 from above. The flange 36 extends outwardly from one side of the upper face 6 of the tank 2. The air pipe 8 and the liquid pipe 10 are disposed side by side and mutually parallel above the upper face 6 of the tank 2 and above the flange 36. The air pipe 8 is centrally positioned and is constructed as a handle by means of which the tank 2 can be carried and by means of which the endpieces 12 and 14 can be inserted into the corresponding recesses 16 and 18 in the connector 20.

In order to simplify this insertion, the endpieces 12 and 14 of the two pipes 8 and 10 each comprise an exterior surface 38 tapering conically downwards. The endpieces 12 and 14 are each provided with sealing means 40 in the form of an O-ring to ensure reliable sealing of the plug-in connection between the endpieces 12 and 14 and the recesses 16 and 18 in the connector 20.

The endpieces 12 and 14 of the pipes 8 and 10 are disposed parallel to the longitudinal axis of the tank 2 and, as may be seen particularly clearly from Figure 2, are of different external diameters. The differing diameters helps to prevent any erroneous connection between the pipes 8 and 10 and the recesses 16 and 18, and accordingly also with the conduits 22 and 24 connected to the recesses 16 and 18. Such erroneous connection of the endpieces 12 and 14 may also be simply avoided by arranging the recesses 16 and 18, and the endpieces 12 and 14, closely together in pairs, so that the spacing between adjacent recesses 16 and 18 is smaller than the spacing between adjacent pairs of recesses. Figure 2 shows such a pairwise distribution of recesses 16 and 18 along the connector 20.

It is also possible to offset the endpieces 12 and 14 radially relative to one another. This is shown in Figure 3 where the endpieces 12 and 14 are set at different radial distances from the longitudinal axis of the tank 2. The recesses 16 and 18 are similarly offset radially.

The downwardly directed endpieces 12 and 14, together with the upright orientation of the tank 2 and the deadweight of the tank, provides a reliable self-centering connection between the tank 2 and the connector 20, and extremely good sealing between the endpieces 12 and 14 of the tank 2 and the recesses 16 and 18 of the connector. A further particular advantage of the tank lies in its simple handlability.

The tank 2 in accordance with the invention is always used in an upright position. It is impossible to overfill the tank with the liquid 4, because the filling pipe connection is located lower than the air pipe 8. The tank can always be filled only up to the filling pipe connection, thus ensuring that there is a positive limit to the quantity of liquid charged to the tank.

In use, all of the liquid 4 can be pumped out of the tank 2 into the incubation chamber 64. After completion of the work process, all the liquid is then pumped back again into the tank 2. For this purpose the pressure generation means 60 sucks air out of the tank by means of the pipe 8. The liquid 4 can then only rise back up to the filling pipe connection. The free volume 30 in the so called steam dome, and/or the difference in height between the filling pipe connection and the pipe 8, ensures that no liquid passes into the suction pipe.

The pressure generation means 60 may comprise a separate or an integral positive pressure and vacuum pump.

As Figure 2 clearly shows, the flange 36 on the tank includes a bore 42 which occupies a precisely defined position in a matrix field 44. The connector 20 is provided with a pin 46, adapted to the bore 42, in proximity to each pair of recesses 16 and 18. In this manner a hole-and-pin coding is generated, as a result of which each tank 2 can be installed only at the station of the connector 20 intended for it.

CLAIMS

1. A tank for use in a specimen treatment apparatus having coupling means, pressure generation means, and a treatment medium reservoir, said tank comprising:

a treatment medium zone for receiving treatment medium,

a conduit for air, and

a conduit for treatment medium,

said air conduit and treatment medium conduit extending through the tank above the treatment medium zone, and being adapted to be coupled to the coupling means to couple the air conduit to the pressure generation means and to couple the treatment medium conduit to the treatment medium reservoir, and

said conduits being adapted to permit the treatment medium zone to be loaded with treatment medium, and the conduits to be subsequently coupled to the coupling means without alteration of the orientation of the tank.

2. A tank according to Claim 1 wherein the coupling means includes a connector having a recess connected to the pressure generation means and a recess connected to the treatment medium reservoir, and wherein said air and liquid conduits each have an outer end each provided with an endpiece adapted to be received in the recesses.

3. A tank according to Claim 2 wherein the tank has an upper region above the treatment medium zone, said conduits extending through the upper region, and a base region opposite said upper region, and wherein the outer ends of each conduit extend in a direction towards the level of the base region of the tank.

4. A tank according to Claim 2 or 3, wherein the endpieces on the outer ends of the air and treatment medium conduuits are disposed side by side alongside the tank and are mutually parallel.

5.  A tank according to Claim 2, 3 or 4, wherein a flange extends outwardly from one side of an upper face of the tank, and the outer ends of the air and treatment medium conduits pass through the flange, the endpieces being positioned on the underside of the flange.

6.  A tank according to Claim 5, wherein the air and treatment medium conduits are disposed side by side and mutually parallel above the upper face of the tank and above the flange, one of the said conduits being constructed as a handle.

7.  A tank according to any one of Claims 2 to 6, wherein the endpieces each comprise an exterior surface tapering conically in a direction towards the connector, and sealing means to seal the endpieces inserted into the recesses of the connector against the connector.

8.  A tank according to any one of Claims 2 to 7, wherein an upper face of the tank includes a raised portion into which the air conduit extends, an inner end of the air pipe being located in an interior space within the raised portion.

9.  A tank according to Claim 8, wherein the liquid conduit extends through an upper face of the tank alongside the raised portion, an inner end of the treatment medium conduit being located adjacent a base of the tank.

10.  A tank according to any one of Claims 2 to 9, wherein the endpieces of the air and treatment medium conduits are disposed parallel to the longitudinal axis of the tank and are offset radially relative to the longitudinal axis of the tank.

11.  A tank according to any one of Claims 2 to 9, wherein the endpieces of the air and treatment medium conduits are disposed parallel to the longitudinal axis of the tank and are of different external diameters.

12.  A tank according to any preceding claim, wherein the pressure generation means can selectively generate a positive or negative pressure.

0158483

1/2

Fig.1.

Fig.2.

0158483

# Fig.3.